# EUROPEAN PATENT APPLICATION

(11) **EP 4 287 323 A1**
(43) Date of publication of application: **06.12.2023**
(21) Application number: 21921982.1
(22) Date of filing: 08.02.2021
(51) Int. Cl.: H01M 4/62, H01M 4/133, H01M 4/134, H01M 10/0525

(54) **BINDER, NEGATIVE ELECTRODE SLURRY, NEGATIVE ELECTRODE, AND LITHIUM-ION BATTERY**

(30) Priority: 28.01.2021 CN 202110117695
(71) Applicant: AESC Japan Ltd., Kanagawa, 2520012 (JP)
(72) Inventor: LI, Ruonan, Shanghai 201315 (CN); SUN, Huayu, Shanghai 201315 (CN)
(74) Representative: Becker, Eberhard
(86) International application number: PCT/CN2021/076033
(87) International publication number: WO 2022/160383

(57) **Abstract**

A binder, a negative electrode slurry, a negative electrode, and a lithium-ion battery. The binder comprises a lithiated block polymer; the lithiated block polymer is a lithiated product of a block polymer having a structure represented by B-C-B-A, wherein A represents a polymer block A, B represents a polymer block B, and C represents a polymer block C; the polymer block A is formed by polymerizing alkenyl formic acid monomers; the polymer block B is formed by polymerizing aromatic vinyl monomers; and the polymer block C is formed by polymerizing acrylate monomers. The binder is strong in ion-conducting capability and better in binding property, so that the peeling strength of the prepared negative electrode is higher, and the lithium-ion battery using the binder has a better rapid charging capability and high and low temperature performance.

## Description

### CROSS-REFERENCE TO RELATED APPLICATION

This application entitled "BINDER, NEGATIVE ELECTRODE SLURRY, NEGATIVE ELECTRODE AND LITHIUM-ION BATTERY" claims the priority benefit of China application serial no. 2021101176951, filed on January 28, 2021. The entirety of the above-mentioned patent application is hereby incorporated by reference herein and made a part of this specification.

### BACKGROUND

### Technical Field

The embodiments of the invention relate to a field of lithium-ion battery, and particularly, to a binder, a negative electrode slurry, a negative electrode, and a lithium-ion battery.

### Description of Related Art

Negative electrode binders are one of the important auxiliary functional materials in lithium-ion batteries, serve as a main source of the internal mechanical properties of the electrode, and mainly function to bond the active material with the active material, the current collector and the active material together. A conventional negative electrode binder mainly includes materials such as styrene-butadiene rubber, acrylic polymers, acrylate polymers, or the like. Although these materials have strong adhesion and good electrochemical stability, they are non-conductive, and this easily increases the internal impedance of the negative electrode, further leading to the degradation of the rapid charging performance of the lithium-ion battery.

To solve the problems, in the conventional technology, two following methods are adopted. First, the affinity of the active material with the binder is improved. For example, the specification of the application serial no. JP5373388B2 discloses a method for mechanochemical treating graphite particles. With the method, the surface of the graphite particles is hydrophilic, the particle size is uniform, the average particle size is reduced, the wettability of the surface is improved, and the affinity for the aqueous binder is increased, contributing to the improvement of the charging efficiency of the lithium-ion battery. However, this method requires special graphite particle processing equipment, which is costly, and cannot bring about the same effect on battery systems where the active material of the negative electrode is non-graphite (e.g. silicon).

Second, a binder with better ion-conducting properties is adopted to replace the conventional binder. For example, the specification of the application serial no. CN105489898B discloses a conductive aqueous binder that can improve the overall conductivity of the battery, and the conductive aqueous binder includes graphene, carbon nanotubes, cross-linked polymers and polyvalent metal ion water-soluble salt solution. Graphene and carbon nanotubes are respectively bonded with the cross-linked polymers through chemical bonds to form a three-dimensional conductive network structure, and the cross-linked polymers are cross-linked with a polyvalent metal ion water-soluble salt solution to form a three-dimensional bonding network structure. However, the conductive water-based adhesive is mainly a combination of a variety of existing materials, the composition is complex, the cost of raw materials used for preparing the conductive water-based adhesive is relatively high, so wide promotion of the conductive water-based adhesive is difficult, and there is an incompatibility when the conductive water-based adhesive is applied to a negative electrode of a silicon system.

Therefore, fining a negative electrode binder having strong ion conductivity, simple composition, low cost, compatibility with various negative electrode systems and being easily widely promoted is required in the field.

### SUMMARY

The object of the embodiments of the invention is to provide a binder, which is strong in ion-conducting capability and better in binding property, so that the peeling strength of the prepared negative electrode is higher, and the lithium-ion battery using the binder has a favorable rapid charging capability and high and low temperature performance.

To solve the technical problems, in a first aspect, the invention provides a binder, the binder includes a lithiated block polymer, and the lithiated block polymer is a lithiated product of a block polymer having a structure represented by B-C-B-A. A represents a polymer block A, B represents a polymer block B, and C represents a polymer block C.

The polymer block A is formed by polymerizing alkenyl formic acid monomers;

The polymer block B is formed by polymerizing aromatic vinyl monomers;

The polymer block C is formed by polymerizing acrylate monomers.

In some preferred solutions, a degree of polymerization of the polymer block A is 10 to 50; a degree of polymerization of the polymer block B is 200 to 500; a degree of polymerization of the polymer block C is 400 to 1000.

In some preferred solutions, a structure of the alkenyl formic acid monomer is 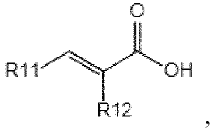 where R¹¹ and R¹² are independently hydrogen or C₁₋₄ alkyl, and the C₁₋₄ alkyl is selected from the group consisting of methyl, ethyl, n-propyl, isopropyl, n-butyl, isobutyl or tert-butyl; preferably, the alkenyl formic acid is acrylic acid.

In some preferred solutions, a structure of the aromatic vinyl monomer is 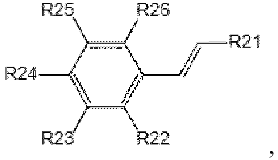 where R²¹, R²², R²³, R²⁴, R²⁵, R²⁶ are independently hydrogen or C₁₋₄ alkyl, and the C₁₋₄ alkyl is selected from the group consisting of methyl, ethyl, n-propyl, isopropyl, n-butyl, isobutyl or tert-butyl; preferably, R²¹, R²², R²³, R²⁴, R²⁵, R²⁶ are hydrogen or methyl and more preferably, the aromatic vinyl is styrene.

In some preferred solutions, a structure of the acrylate monomer is 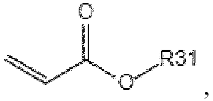 where R³¹ is a linear or branched C1-10 alkyl; more preferably, R³¹ is a linear or branched C₄₋₈ alkyl, and further preferably, R³¹ is

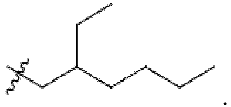

The block polymer of the invention can be prepared by a conventional step-by-step feed polymerization method in the field. The step-by-step feed polymerization method is to add each polymer block A, polymer block B, or polymer block C in steps according to the specific block structure of the block polymer to implement the step-by-step polymerization of each polymer block.

In some preferred solutions, the lithiated block polymer has a structure represented by formula (I); 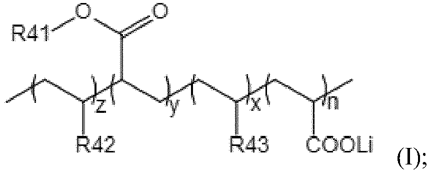
where n is 10-50; x is 200-500; y is 400-1000; z is 200-500;
R⁴¹ is C₄₋₈ alkyl and preferably 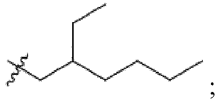
R⁴² and R⁴³ are phenyl or C₁₋₄ alkyl-substituted phenyl; and the phenyl of the C₁₋₄ alkyl is selected from the group consisting of methyl, ethyl, n-propyl, isopropyl, n-butyl, isobutyl or tert-butyl substituted phenyl; preferably, R⁴² and R⁴³ are phenyl.

In some preferred solutions, the lithiated block polymer is 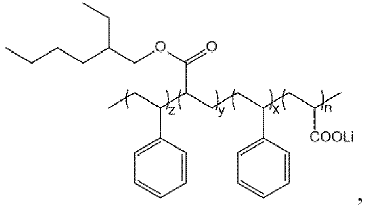 where n is 10-50; x is 200-500; y is 400-1000; z is 200-500.

The lithiated block polymer of the invention can be prepared by lithiation of the block polymer, the block polymer can be prepared by a step-by-step feed polymerization method conventional in the field, and the step-by-step feeding polymerization method is to add each polymer block (A), polymer block (B) or polymer block (C) step by step according to the specific block structure of the block polymer to implement step-by-step polymerization of each polymer block. For example, the steps for preparing a block polymer B-C-B-A (A represents the polymer block (A), B represents the polymer block (B), and C represents the polymer block (C)) include the followings. (1) The polymer block (A) and the polymer block (B) undergo a polymerization reaction to obtain the polymer block (B-A). (2) The polymer block (C) and the polymer block (B-A) undergo a polymerization reaction to obtain the polymer block (C-B-A). (3) The polymer block B reacts with the polymer block (C-B-A) to obtain the block polymer B-C-B-A.

In a second aspect, the invention provides a preparation method of a binder, the preparation method includes steps as follows.
(1) Polyacrylic acid-styrene-acrylic acid isooctanoate (PAA-PSt-PEHA) and styrene monomer are polymerized to obtain polyacrylic acid-styrene-acrylic acid isooctanoate-styrene (PAA-PSt -PEHA-PSt); and
(2) polyacrylic acid-styrene-isooctanoate-acrylate-styrene (PAA-PSt-PEHA-PSt) is treated with lithium hydroxide to obtain the binder; 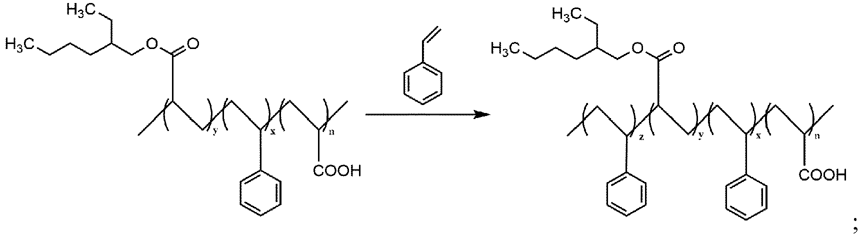 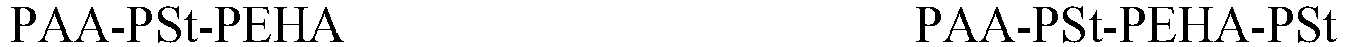 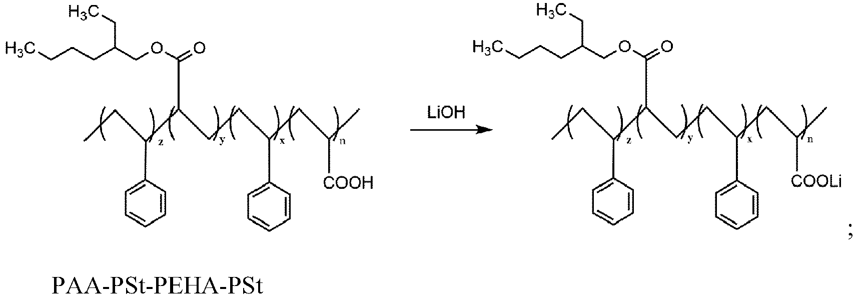 where n is 10-50, x is 200-500, y is 400-1000, and in step (2), z is 200-500.

In step (1), the mass ratio of the polyacrylic acid-styrene-acrylic acid isooctanoate-styrene (PAA-PSt-PEHA-PSt) to the styrene monomer is preferably (0.01-0.3):1; more preferably (0.02-0.27):1.

In step (1), the polymerization reaction is preferably carried out in the presence of an initiator, and the initiator is preferably potassium persulfate, sodium persulfate, or ammonium persulfate.

In step (1), the temperature of the polymerization reaction is preferably 50-90°C, more preferably 60-80°C.

In step (1), the time of the polymerization reaction is preferably 2-8 hours.

In step (1), after the polymerization reaction, the polymerization reaction product polyacrylic acid-styrene-isooctanoate acrylate-styrene (PAA-PSt-PEHA-PSt) is washed with deionized water to a pH 3-6.

In step (2), the lithium hydroxide is preferably an aqueous solution of lithium hydroxide, and in the aqueous lithium hydroxide solution, the mass fraction of lithium hydroxide is preferably 5%-15%.

In step (1), the preparation of the polyacrylic acid-styrene-acrylic acid isooctanoate (PAA-PSt-PEHA) includes steps as follows.
(A) Polyacrylic acid-styrene (PAA-PSt) and isooctyl acrylate monomers are polymerized to obtain polyacrylic acid-styrene-iso-octyl acrylate (PAA-PSt-PEHA); 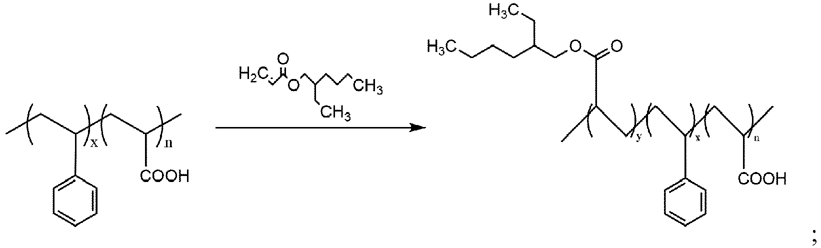 where in step (A), n is 10-50; x is 200-500; y is 400-1000.

In step (A), the mass ratio of the polyacrylic acid-styrene (PAA-PSt) to the isooctyl acrylate is preferably (0.6-0.9):1; more preferably (0.6-0.7):1.

In step (A), the polymerization reaction is preferably carried out in the presence of an initiator, and the initiator is preferably potassium persulfate, sodium persulfate, or ammonium persulfate; for example, potassium persulfate.

In step (A), the temperature of the polymerization reaction is preferably 50-90°C, more preferably 60-80°C.

In step (A), the time of the polymerization reaction is preferably 2-8 hours, more preferably 2-6 hours.

In step (A), the preparation of the polyacrylic acid-styrene (PAA-PSt) includes steps as follows.
(I) Polyacrylic acid and styrene monomers are polymerized to obtain polyacrylic acid-styrene (PAA-PSt); 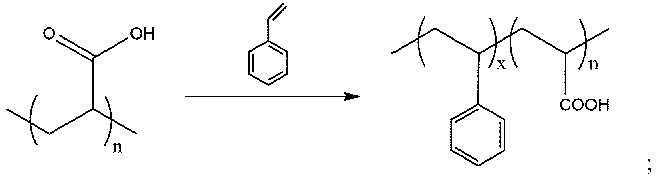 where n is 10-50; x is 200-500.

In step (I), the mass ratio of the polyacrylic acid to the styrene monomer is preferably 1:(3-90); more preferably 1:(5-75).

In step (I), the polymerization reaction is preferably carried out in the presence of an initiator, and the initiator is preferably potassium persulfate, sodium persulfate, or ammonium persulfate.

In step (I), the temperature of the polymerization reaction is preferably 50-90°C, more preferably 60-80°C.

In step (I), the polymerization reaction time is preferably 2-10 hours, more preferably 2-8 hours.

In step (I), the preparation method of the polyacrylic acid is not limited, but preferably the preparation method of the polyacrylic acid is that in the presence of a RAFT reagent and an initiator, the polyacrylic acid monomer is subject to a polymerization reaction, that is, the polyacrylic acid. In the polymerization reaction, the mass ratio of the RAFT reagent, to the initiator, and to the acrylic monomer is preferably (0.5-1.0):(0.2-0.5):(10-20); the temperature of the polymerization reaction is preferably 50-90°C, more preferably 60-80°C; the time of the polymerization reaction is preferably 10-22 hours, more preferably 12-20 hours; the initiator is preferably potassium persulfate, sodium persulfate, ammonium persulfate; the RAFT reagent is preferably 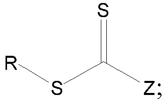 where R is isopropionic acid group, acetic acid group, 2-cyanoacetic acid group or 2-aminoacetic acid group; z is C4-12 alkyl, C4-12 alkylthio, phenyl or benzyl, for example, 2-mercapto-S-thiobenzoylacetic acid.

In a third aspect, the invention provides a negative electrode slurry for a lithium-ion battery. The negative electrode slurry includes an active material of the negative electrode, a conductive agent, a binder, and a thickener. The binder includes the lithiated block polymer.

In some preferred solutions, the mass ratio of the negative electrode active material, to the conductive agent, to the binder and to the thickener is a:b:c:d, where a is 93-97; b is 3-5; c is 3-5; d is 0.5-1.5, and a+b+c+d=100.

In a fourth aspect, the invention further provides a negative electrode of the lithium-ion battery including the negative electrode slurry. The negative electrode includes a current collector and an active material layer of the negative electrode covering the current collector, and the active material layer of the negative electrode is formed on the current collector by coating the negative electrode slurry.

The negative electrode active material of the negative electrode of the invention is a material that can intercalate and de-intercalate lithium, which includes but not limited to crystalline carbon (graphite and artificial graphite, etc.), amorphous carbon, carbon-coated graphite and resin-coated graphite and other carbon materials, indium oxide, silicon oxide, tin oxide, lithium titanate, zinc oxide and oxide lithium and other oxide materials. The active material of the negative electrode may also be lithium metal or a metal material that can form an alloy with lithium. Specific examples of metals that can form an alloy with lithium include Cu, Sn, Si, Co, Mn, Fe, Sb, and Ag. A binary or ternary alloy containing these metals and lithium can also be used as the active material of the negative electrode. These active materials of the negative electrode may be used alone or in combination of two or more. From the viewpoint of high energy density, as the active material of the negative electrode, a carbon material such as graphite and a Si-based active material such as Si, Si alloy, and Si oxide can be combined. From the viewpoint of achieving both cycle characteristics and high energy density, as the active material of the negative electrode, graphite and Si-based active materials may be combined. Regarding the combination, the ratio of the mass of the Si-based active material to the total mass of the carbon material and the Si-based active material may be 0.5% or more and 95% or less, 1% or more and 50% or less, or 2% or more and 40% or less. In various embodiments, the active material of the negative electrode is dispersed in the dense inter-crosslinked network structure.

The conductive agent of the negative electrode of the invention is a conductive material that does not cause chemical changes and can be selected from at least one of graphite, artificial graphite, carbon black, acetylene black, carbon fiber, polyphenylene derivatives, metal powder including copper, nickel, aluminum, silver and metal fiber.

The current collector of the negative electrode of the invention can be selected from at least one of copper foil, nickel foil, stainless steel foil, titanium foil, nickel foam, copper foam, and polymer materials coated with conductive metal.

In a fifth aspect, the invention provides a lithium-ion battery. The lithium-ion battery includes a positive electrode, a negative electrode, a separator, and an electrolyte, where the negative electrode is the negative electrode provided in the fourth aspect of the invention.

The positive electrode of the lithium-ion battery of the invention includes an active material of the positive electrode, and the active material of the positive electrode may be a lithium-containing composite oxide. As a specific example of the lithium-containing composite oxide, examples include LiMnO₂, LiFeO₂, LiMn₂O₄, Li₂FeSiO₄, LiN_{i1/3}C_{o1/3}M_{n1/3}O₂, LiNi₅CO₂Mn₃O₂, LizNi_{(1-x-y)}CoₓM_{y}O₂ (x, y, and z are values satisfying 0.01≤x≤0.20, 0≤y≤0.20, and 0.97≤z≤1.20, M represents at least one element selected from the group consisting of Mn, V, Mg, Mo, Nb and Al), LiFePO₄ and Li_{z}CO₍₁₋ₓ₎MₓO₂ (x and z are values satisfying 0≤x≤0.1 and 0.97≤z≤1.20, M represents at least one element selected from the group consisting of Mn, Ni, V, Mg, Mo, Nb, and Al). The active material of the positive electrode may also be LizNi_{(1-x-y)}CoₓM_{y}O₂ (x, y and z are values satisfying 0.01≤x≤0.15, 0≤y≤0.15 and 0.97≤z≤1.20, M represents at least one element selected from the group consisting of Mn, Ni, V, Mg, Mo, Nb and Al) or Li_{z}CO₍₁₋ₓ₎MₓO₂ (x and z are values satisfying 0≤x≤0.1 and 0.97≤z≤1.20, M represents at least one element selected from the group consisting of Mn, V, Mg, Mo, Nb and Al).

The separator of the lithium-ion battery of the invention is not particularly limited and can include a single-layer or multiple layers of microporous films, woven fabric, or non-woven fabric of polyolefin such as polypropylene and polyethylene.

The non-aqueous electrolyte of the lithium-ion battery of the invention is not particularly limited, and electrolyte formulations commonly used in the field can be used, which is not illustrated in detail herein.

Without violating the understanding of common knowledge in the field, the preferred conditions can be combined arbitrarily to obtain preferred embodiments of the invention.

The reagents and raw materials used in the invention are all commercially available.

Compared with the conventional technology, the lithiated block polymer provided by the invention at least has advantages as follows.
(1) From the perspective of molecular structure design, the invention provides a lithiated block polymer, which has good ion-conducting ability and contributes to reducing the internal impedance of the electrode.
(2) The lithiated block polymer of the invention has low cost, is compatible with various negative electrode systems, and is easily widely promoted.
(3) With the lithiated block polymer of the invention as a binder, the binder has better adhesion and the peeling strength of the prepared lithium-ion battery negative electrode is high.
(4) With the lithiated block polymer of the invention as a binder, the prepared lithium-ion battery has favorable rapid charging ability, favorable low temperature discharge ability, and less gas generation at high temperature.

### DESCRIPTION OF THE EMBODIMENTS

In order to make the objects, technical solutions and advantages of the embodiments of the invention clearer, the various embodiments of the invention will be described in detail below with reference to specific embodiments. It should be understood that although those of ordinary skill in the art will appreciate that in various embodiments of the invention, numerous technical details are set forth in order to provide the reader with a better understanding of the present application, even without these technical details and various changes and modifications based on the following embodiments, the technical solutions claimed in the present application can be implemented. In the following examples, the experimental methods without specific conditions are usually in accordance with conventional conditions, or in accordance with the conditions suggested by the manufacturer. Percentages and parts are calculated by weight unless otherwise indicated.

### Embodiment 1: Preparation of Binder--Preparation of Lithiumized Polyacrylic Acid-Styrene-Acrylic Isooctanoate-Styrene (PAA-PSt-PEHA-PSt)

### Step 1: Preparation of Polyacrylic Acid (PAA)

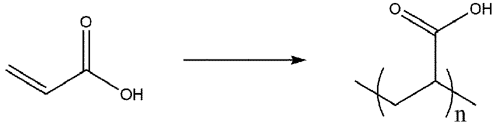

1.0g of 2-mercapto-S-thiobenzoylacetic acid (molecular weight is 212.3g/mol) is weighed, and 3.0-17.0g of refined acrylic monomers are mixed, and the mixture is poured into a 500mL of three-necked flask. In addition, 0.2-0.5g potassium persulfate is weighed, dissolved in 5-10g deionized water, stored at a low temperature for later use, placed on a water bath with an addition of magnets, and stirred to dissolve at room temperature. Subsequently, nitrogen is passed for 30 min to remove oxygen therein, the temperature rises to 60-80° C., and the aforementioned potassium persulfate aqueous solution is added to react for 12-20 hours to obtain the preparation of the polyacrylic acid (PAA).

### Step 2: Preparation of polyacrylic acid-styrene (PAA-PSt)

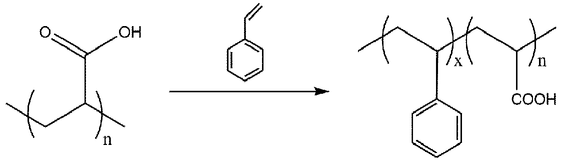

98.0-245.0g of styrene monomers are weighed and through a syringe, slowly added into the flask after the reaction in step 1. The reaction is continuously performed at 60-80 ° C for 2-8 hours to obtain the polyacrylic acid-styrene (PAA-PSt).

### Step 3: Preparation of Polyacrylic Acid-Styrene-Isooctyl Acrylate (PAA-PSt-PEHA)

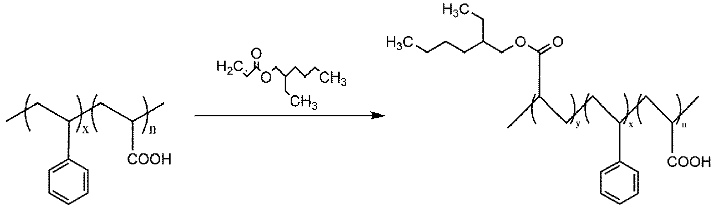

347.0-866.0g of isooctyl acrylate monomers are weighed and through a syringe, slowly added into the flask after the reaction in step 2. The reaction is performed continuously at 60-80°C for 2-6 hours to obtain the polyacrylic acid-styrene-acrylic acid Isooctyl ester (PAA-PSt-PEHA).

### Step 4: Preparation of Polyacrylic Acid-Styrene-Isooctyl Acrylate-Styrene (PAA-PSt-PEHA-PSt)

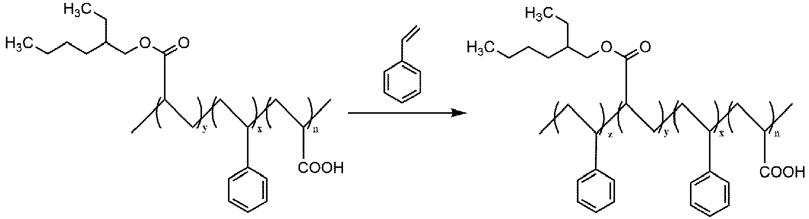

98.0-245.0g of styrene monomers are weighed and through a syringe, slowly added into the flask after the reaction in step 3. The reaction is performed continuously at 60-80°C for 2-8 hours. The reacted product is washed with deionized water until the pH is 3- 6, and the polyacrylic acid-styrene-isooctyl acrylate-styrene (PAA-PSt-PEHA-PSt) is obtained.

### Step 5: Preparation of lithiated polyacrylic acid-styrene-isooctyl acrylate-styrene (PAA-PSt-PEHA-PSt)

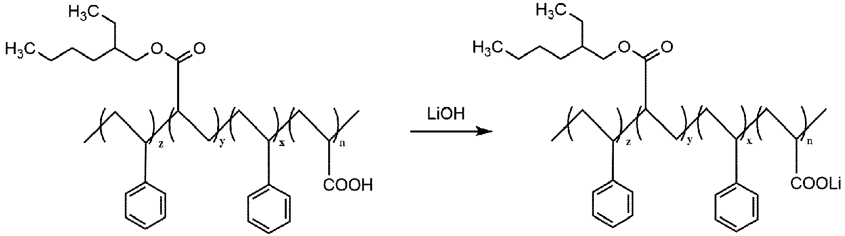

500 g of the polyacrylic acid-styrene-iso-octyl acrylate-styrene (PAA-PSt-PEHA-PSt) obtained in step 4 and 15-25g of lithium hydroxide solution (containing 0.75-3.75g of lithium hydroxide) with a mass fraction of 5%-15% are taken and stirred at a speed of 300rpm/h to react for 60 minutes, and the lithiated polyacrylic acid-styrene-isooctyl acrylate-styrene (PAA-PSt-PEHA-PSt) is obtained.

### Embodiment 2: Preparation of Lithium-ion Battery

The lithiated polyacrylic acid-styrene-isooctyl acrylate-styrene (PAA-PSt-PEHA-PSt) prepared in Embodiment 1 is adopted as a battery binder for preparing a 1Ah pouch battery.

### Preparation of positive electrode piece

An active material NCM811 of the positive electrode, conductive carbon black Super-P, and binder polyvinylidene fluoride (PVDF) are mixed in a mass ratio of 96:2:2 and then dispersed in N-methyl-2-pyrrolidone (NMP) to obtain the positive electrode slurry, and the obtained positive electrode slurry is obtained. The slurry is evenly coated on both sides of the aluminum foil, dried, calendered and dried in a vacuum at 80°, and the aluminum lead wire is welded by an ultrasonic welder to obtain a positive electrode piece with a thickness of 120-150 µm.

### Preparation of negative electrode piece

A composite active material (98% artificial graphite + 2% silicon-oxygen negative electrode) of the negative electrode, conductive carbon black Super-P, the lithiated polyacrylic acid-styrene-isooctyl acrylate-styrene (PAA-PSt-PEHA-PSt) prepared in Embodiment 1, and thickener sodium carboxymethyl cellulose are mixed in a mass ratio of 95:2:2:1 and then dispersed in deionized water to obtain negative electrode slurry. The slurry is coated on both sides of the copper foil, dried, calendered, and vacuum dried, and nickel lead wires are welded by an ultrasonic welder to obtain a negative electrode piece with a thickness of 80-100µm.

### Preparation of cells

A separator with a thickness of 20 µm is placed between the positive electrode piece and the negative electrode piece, then a sandwich structure composed of the positive electrode piece, the negative electrode piece and the separator is wound, and the wound is flattened and placed in an aluminum foil packaging bag, which is vacuum baked at 85°C for 48 hours to obtain the cell to be injected.

### Cell injection synthesis

An electrolyte is injected into the cell in the glove box, packaged in vacuum, and set aside for 24 hours. Then, the routine formation of the first charging is carried out according to steps as follows. The cell is charged with a constant current of 0.02C to 3.05V, charged with a constant current of 0.05C to 3.75V, and charged with a constant current of 0.2C to 4.05V, and vacuum packaging is performed. Then, the cell is further charged with a constant current of 0.33C to 4.2V, and after being set aside at room temperature for 24 hours, the cell is discharged with a constant current of 0.2C to 3.0V.

In Embodiment 3, a lithium-ion battery is prepared in the same manner as in Embodiment 2, except that in the preparation of the negative electrode piece, artificial graphite is used in the negative electrode active material.

### Comparative example 1: Preparation of Li-ion Battery Using Conventional SBR Binder

### Preparation of positive electrode piece

An active material NCM811 of the positive electrode, conductive carbon black Super-P, and binder polyvinylidene fluoride (PVDF) are mixed in a mass ratio of 96:2:2 and then dispersed in N-methyl-2-pyrrolidone (NMP) to obtain the positive electrode slurry, and the obtained positive electrode slurry is obtained. The slurry is evenly coated on both sides of the aluminum foil, dried, calendered, and dried in a vacuum at 80°, and the aluminum lead wires are welded by an ultrasonic welder to obtain a positive electrode piece with a thickness of 120-150 µm.

### Preparation of negative electrode piece

A composite active material (98% artificial graphite + 2% silicon-oxygen negative electrode) of the negative electrode, conductive carbon black Super-P, SBR and thickener sodium carboxymethyl cellulose are mixed in a mass ratio of 95:2:2:1 and then dispersed in deionized water to obtain negative electrode slurry. The slurry is coated on both sides of the copper foil, dried, calendered, and vacuum dried, and nickel lead wires are welded by an ultrasonic welder to obtain a negative electrode piece with a thickness of 80-100µm.

### Preparation of cells

A separator with a thickness of 20 µm is placed between the positive electrode piece and the negative electrode piece, then a sandwich structure composed of the positive electrode piece, the negative electrode piece and the separator is wound, and the wound is flattened and placed in an aluminum foil packaging bag, which is vacuum baked at 85°C for 48 hours to obtain the cell to be injected.

### Cell injection synthesis

An electrolyte is injected into the cell in the glove box, packaged in vacuum, and set aside for 24 hours. Then, the routine formation of the first charging is carried out according to steps as follows. The cell is charged with a constant current of 0.02C to 3.05V, charged with a constant current of 0.05C to 3.75V, and charged with a constant current of 0.2C to 4.05V, and vacuum packaging is performed. Then, the cell is further charged with a constant current of 0.33C to 4.2V, and after being set aside at room temperature for 24 hours, the cell is discharged with a constant current of 0.2C to 3.0V.

In Comparative example 2, a lithium-ion battery is prepared in the same manner as in Comparative example 1, except that in the preparation of the negative electrode piece, artificial graphite is used in the negative electrode active material.

### Test example 1: Characterization of lithiated polyacrylic acid-styrene-isooctanoate acrylate-styrene (PAA-PSt-PEHA-PSt)

0.01 g of polyacrylic acid-styrene-iso-octanoate acrylate-styrene is dissolved in 5 ml of tetrahydrofuran solvent, whose molecular weight and molecular weight distribution curve are measured by gel permeation chromatography. The results are shown in Table 1.

**Table 1**

| Types of polymers | Designed molecular weight Mn | Conversion rate | Measured molecular weight Mn | Molecular weight distribution PDI |
|---|---|---|---|---|
| | [g mol⁻¹] | % | [g mol⁻¹] | Mw/Mn |
| PAA | 2500 | 98.7 | 2673 | 1.07 |
| PAA-PSt | 2.5K-45K | 99.2 | 46.3K | 1.09 |
| PAA-PSt-PEHA | 2.5K-45K-120K | 98.8 | 166.2K | 1.18 |
| PAA-PSt-PEHA-PSt | 2.5K-45K-120K-45K | 99.2 | 208.8K | 1.23 |

### Test example 2: Lithium-ion battery performance test

### (1) Test on rapid charging capability

At 25°C, the batteries prepared in the embodiments and comparative examples are subjectto a constant current charging test at a rate of 2C, and the rate charge capacity retention rate is calculated. The charging retention rate of the battery at a rate of 2C = the capacity released by the battery after being charged at a rate of 2C/the capacity released by the battery after being charged at a rate of 1/3C), and the results are shown in Table 2.

**Table 2**

| Rate charging capability vs.0.33C@25°C | |
|---|---|
| rate | 2C |
| Embodiment 2 | 82.4% |
| Embodiment 3 | 80.2% |
| Comparative example 1 | 77.5% |
| Comparative example 2 | 71.9% |

### (2) Test on peel strength

The negative electrode pieces prepared in the embodiments and the comparative examples are cut into strips with a width of 2cm×10cm. The same size 3M VHB double-sided tape (wipe it with alcohol before sticking) is stuck to the same size rectangular stainless steel plate, a roller with a certain weight is used to roll back and forth on the tape three times to be closely bonded to the steel plate, then the electrode piece (active material side) is precisely bonded to the other side of the tape and is rolled three times with a roller, and finally, it is placed in a universal material testing machine to test the peel strength.

A section of the steel plate is placed on the fixture below the machine. The steel plate is clamped vertically with the ground, gently torn from the bottom to the middle of the electrode piece, and bent 180° to the fixture above the machine to clamp. The machine is controlled to adjust the position of the upper fixture, the test software is open, the test condition is set as the tensile rate of 50 mm/min, all the initial parameters are set nil, and the test starts. The results obtained are shown in Table 3.

**Table 3**

| Test on peeling strength at 180°/N m⁻¹ | |
|---|---|
| Embodiment 2 | 18 |
| Embodiment 3 | 15 |
| Comparative example 1 | 13 |
| Comparative example 2 | 10 |

### (3) Test on high temperature gas production performance

The batteries prepared in the embodiments and comparative examples are weighed for initial weight and initial volume (measured by the drainage method), then set aside in an environment at 60°C, and taken out every 7 days. When the temperature of the batteries cools down to the room temperature, the volumes of the batteries are measured, and the volume growth rate is calculated. After each measurement, the batteries are put back into the environment at 60°C and charged with a current of 0.03C until 28 days. The results obtained are shown in Table 4.

**Table 4**

| the volume growth rate of high temperature gas production % | | | | |
|---|---|---|---|---|
| Duration of a test | 7 days | 14 days | 21 days | 28 days |
| Embodiment2 | 2.45% | 3.99% | 4.55% | 4.85% |
| Embodiment3 | 2.49% | 4.88% | 6.86% | 8.95% |
| Comparative example1 | 3.85% | 4.96% | 6.73% | 8.99% |
| Comparative example2 | 4.84% | 6.94% | 7.85% | 9.74% |

### (4) Test on low temperature discharge capability

The discharge capacity retention rates of the batteries prepared in the embodiments and the comparative examples are measured at -20°C. The fully charged battery is discharged with a current of 1C to 3.0V at 25°C, and the initial discharge capacity is recorded as DC (25°C). Subsequently, at 25°C, the batteries are charged with a constant current and constant voltage of 1C to 4.2V, and the cut-off current is 0.05C. After that, when the temperature cools down to - 20°C, the batteries are set aside for 4 hours and then discharged with a constant current of 1C to 3.0V, and the discharge capacity DC (-20°C) is recorded. Discharge capacity retention rate at - 20°C=100%*DC (-20°C)/DC (25°C). The results obtained are shown in Table 5.

**Table 5**

| Low temperature (-20°C ) capacity retention rate @0.33C | |
|---|---|
| Embodiment2 | 75.3% |
| Embodiment3 | 72.5% |
| Comparative example 1 | 69.2% |
| Comparative example 2 | 65.7% |

Those of ordinary skill in the art shall understand that the aforementioned implementations are specific embodiments for implementing the invention, and in practical applications, various modifications to form and details can be made without departing from the spirit and the scope of the invention.

## Claims

1. A binder, **characterized by** that the binder comprises a lithiated block polymer, and the lithiated block polymer is a lithiated product of a block polymer having a structure represented by B-C-B-A, wherein A represents a polymer block A, B represents a polymer block B, and C represents a polymer block C;
the polymer block A is formed by polymerizing alkenyl formic acid monomers;
the polymer block B is formed by polymerizing aromatic vinyl monomers;
the polymer block C is formed by polymerizing acrylate monomers.

2. The binder according to claim 1, **characterized by** that a structure of the alkenyl formic acid monomer is 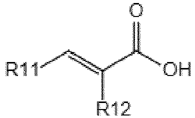 , wherein R¹¹ and R¹² are independently hydrogen or C₁₋₄ alkyl;
and/or a structure of the aromatic vinyl monomer is 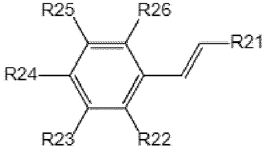 , wherein R²¹, R²², R²³, R²⁴, R²⁵, R²⁶ are independently hydrogen or C₁₋₄ alkyl;
and/or a structure of the acrylate monomer is 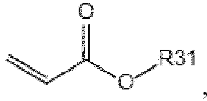 wherein R³¹ is a linear or branched C1-10 alkyl.

3. The binder according to claim 2, **characterized by** that the alkenyl formic acid monomer is acrylic acid;
and/or the aromatic vinyl monomer is styrene;
and/or the structure of the acrylate monomer is 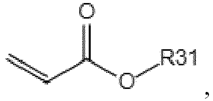 wherein R³¹ is a linear or branched C₄₋₈ alkyl.

4. The binder according to any one of claims 1 to 3, **characterized by** that in the block polymer, a degree of polymerization of the polymer block A is 10 to 50;
a degree of polymerization of the polymer block B is 200 to 500;
a degree of polymerization of the polymer block C is 400 to 1000.

5. The binder according to claim 1, **characterized by** that the lithiated block polymer has a structure represented by formula (I); 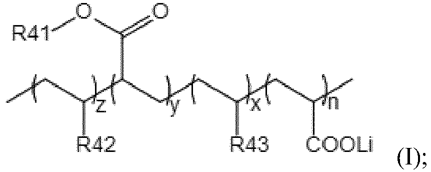 wherein n is 10-50; x is 200-500; y is 400-1000; z is 200-500; R⁴¹ is C₄₋₈ alkyl; R⁴² and R⁴¹ are phenyl or C₁₋₄ alkyl-substituted phenyl.

6. The binder according to claim 1, **characterized by** that the lithiated block polymer is 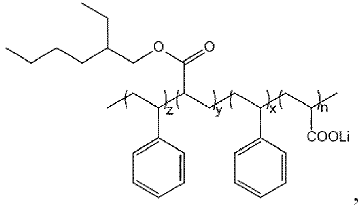 wherein n is 10-50; x is 200-500; y is 400-1000; z is 200-500.

7. A negative electrode slurry for a lithium-ion battery, **characterized by** that the negative electrode slurry comprises an active material of a negative electrode, a conductive agent, the binder according to any one of claims 1 to 6, and a thickener.

8. The negative electrode slurry according to claim 7, **characterized by** that a mass ratio of the active material of the negative electrode, to the conductive agent, to the binder and to the thickener is a:b:c:d, where a is 93-97; b is 3-5; c is 3-5; d is 0.5-1.5, and a+b+c+d=100.

9. A negative electrode, **characterized by** that the negative electrode comprises a current collector and an active material layer of a negative electrode covering the current collector, and the active material layer of the negative electrode is formed on the current collector by coating the negative electrode slurry according to claim 7 or 8.

10. The negative electrode according to claim 9, **characterized by** that the active material of the negative electrode comprises silicon and/or graphite.

11. A lithium-ion battery, **characterized by** that the lithium-ion battery comprises a positive electrode, the negative electrode according to claim 9 or 10, a separator, and an electrolyte.
